# EUROPEAN PATENT APPLICATION

(11) **EP 4 432 427 A1**
(43) Date of publication of application: **18.09.2024**
(21) Application number: 23200518.1
(22) Date of filing: 28.09.2023
(51) Int. Cl.: H01M 50/103, H01M 50/176, H01M 50/55, H01M 50/562, H01M 50/553, H01M 50/557

(54) **POWER STORAGE CELL**

(30) Priority: 11.11.2022 JP 2022180742
(71) Applicant: TOYOTA JIDOSHA KABUSHIKI KAISHA, Toyota-shi, Aichi-ken, 471-8571 (JP)
(72) Inventor: ONO, Masato, Toyota-shi, 471-8571 (JP); SUZUKI, Kosuke, Toyota-shi, 471-8571 (JP); ISHIKAWA, Shinya, Toyota-shi, 471-8571 (JP); KAKISHITA, Kenichi, Toyota-shi, 471-8571 (JP); AWANO, Hiroki, Toyota-shi, 471-8571 (JP)
(74) Representative: D Young & Co LLP

(57) **Abstract**

A power storage cell (1) comprises an electrode assembly (100), a cell case (200) accommodating the electrode assembly (100), and an external terminal (300) secured to an upper surface of the cell case (200). The external terminal (300) has a terminal plate (330) located above the cell case (200), and an insulating plate (340) interposed between the cell case (200) and the terminal plate (330). The insulating plate (340) supports the terminal plate (330) in such a manner that a gap is formed between the insulating plate (340) and the terminal plate (330).

## Description

### CROSS REFERENCE TO RELATED APPLICATIONS

This nonprovisional application is based on Japanese Patent Application No. 2022-180742 filed on November 11, 2022, with the Japan Patent Office, the entire contents of which are hereby incorporated by reference.

### BACKGROUND

### Field

The present disclosure relates to a power storage cell.

### Description of the Background Art

Japanese Patent Laying-Open No. 2015-162458 discloses a conventional power storage cell. This power storage cell is a secondary battery, and comprises an electrode assembly, a case accommodating the electrode assembly, and a cap assembly sealing the top opening of the case. The cap assembly includes a cap plate and an electrode terminal. The cap plate may be a metal plate having a size and shape corresponding to the top opening of the case. A terminal through hole passing through between top and bottom surfaces of the cap plate is formed in the center of the cap plate. The electrode terminal is inserted in the terminal through hole in the cap plate. The electrode terminal may consist of a cylindrical body part inserted in the terminal through hole in the cap plate and a head part protruding a predetermined length to a top surface of the cap plate. The top surface of the cap plate and the head part of the electrode terminal are electrically insulated from each other by a gasket.

### SUMMARY

There may be an occasion where external terminals of a plurality of power storage cells are connected to each other by means of bus bars. In such an occasion, a metal terminal portion of the external terminal (a head part of the electrode terminal) is connected to the bus bar by welding. The welding heat propagates from the welded portion of the external terminal to an insulating plate that electrically insulates the metal terminal portion from the top surface of the cell case. As a result, there is a chance that the insulating plate may become deformed due to melting and thermal cracking. If the insulating plate is thermally deformed, at the time when external stress is applied to the insulating plate, differential displacement of the insulating member tends to occur inside the power storage cell. This may cause a decrease of insulating performance of the insulating member.

The present disclosure has been devised in light of the above-described problem, and an object of the present disclosure is to provide a power storage cell capable of reducing propagation of heat, which is applied at the time of welding of the external terminal to the bus bar, to the insulating plate.

A power storage cell according to an aspect of the present disclosure comprises an electrode assembly, a cell case accommodating the electrode assembly, and an external terminal secured to an upper surface of the cell case. The external terminal has a terminal plate located above the cell case, and an insulating plate interposed between the cell case and the terminal plate. The insulating plate supports the terminal plate in such a manner that a gap is formed between the insulating plate and the terminal plate.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically illustrating a power storage cell according to First Embodiment of the present disclosure.
Fig. 2 is an exploded perspective view of the power storage cell illustrated in Fig. 1.
Fig. 3 is a cross-sectional view of the power storage cell illustrated in Fig. 1.
Fig. 4 is an enlarged cross-sectional view of a positive electrode member and its surroundings.
Fig. 5 is an enlarged cross-sectional view of a negative electrode member and its surroundings.
Fig. 6 is an enlarged cross-sectional view of a power storage cell according to First Modification of First Embodiment of the present disclosure.
Fig. 7 is an enlarged cross-sectional view of a power storage cell according to Second Modification of First Embodiment of the present disclosure.
Fig. 8 is a perspective view schematically illustrating a power storage cell according to Second Embodiment of the present disclosure.
Fig. 9 is an exploded perspective view of the power storage cell illustrated in Fig. 8.

### DESCRIPTION OF THE PREFERRED EMBODIMENTS

A description will be given of embodiments of the present disclosure, with reference to drawings. In the drawings referenced below, the same or equivalent members are denoted by the same numeral.

### (First Embodiment)

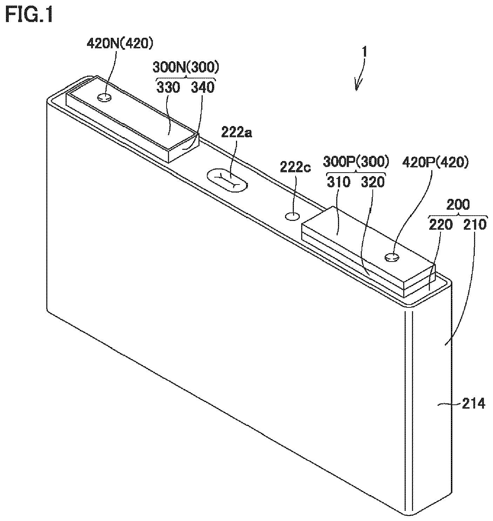

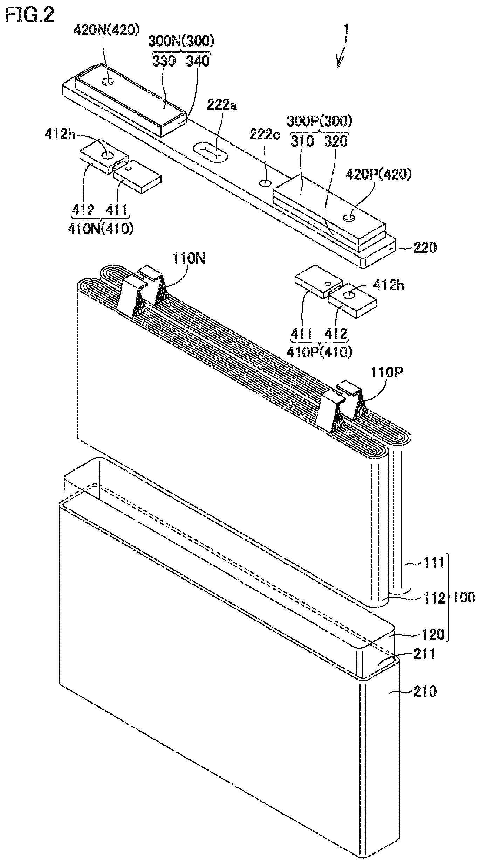

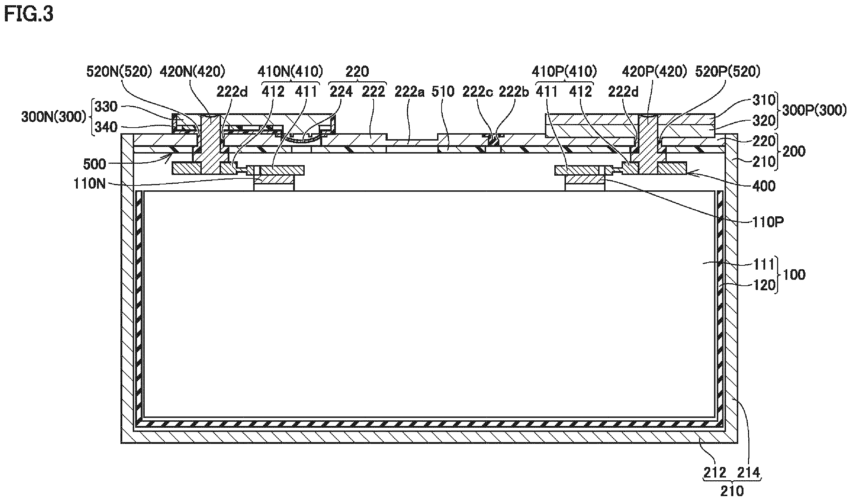

Fig. 1 is a perspective view schematically illustrating a power storage cell according to First Embodiment of the present disclosure. Fig. 2 is an exploded perspective view of the power storage cell illustrated in Fig. 1. Fig. 3 is a cross-sectional view of the power storage cell illustrated in Fig. 1.

As illustrated in Fig. 1 to Fig. 3, a power storage cell 1 comprises an electrode assembly 100, a cell case 200, an external terminal 300, a connecting member 400, and an insulating member 500.

Electrode assembly 100 has a plurality of unit electrode assemblies 111, 112 and an insulating film 120. In the present embodiment, the plurality of unit electrode assemblies comprise two unit electrode assemblies 111, 112. Each unit electrode assembly 111, 112 includes a plurality of tabs, namely, a plurality of positive electrode tabs 110P and a plurality of negative electrode tabs 1 10N. Unit electrode assemblies 111, 112 have the same structure. Hence, in the following, unit electrode assembly 111 will be described.

Unit electrode assembly 111 includes a positive electrode sheet, a separator, and a negative electrode sheet. Each of the positive electrode sheet, the negative electrode sheet, and the separator is formed in a long rectangular shape.

The positive electrode sheet includes a metal foil and a positive electrode composite material layer formed on the metal foil. The upper long side of the metal foil is provided with an uncoated portion to which the positive electrode composite material layer is not provided, and at this uncoated portion, the plurality of positive electrode tabs 110P are formed with some space between them.

The negative electrode sheet includes a metal foil and a negative electrode composite material layer formed on the metal foil. The upper long side of the metal foil is provided with an uncoated portion to which the negative electrode composite material layer is not provided, and at this uncoated portion, the plurality of negative electrode tabs 110N are formed with some space between them.

In a state where the sheets are wound in a roll, positive electrode tabs 110P are aligned in the thickness direction (the direction in Fig. 3 orthogonal to the surface of the paper), and negative electrode tabs 110N are aligned in the thickness direction. Positive electrode tab 110P and negative electrode tab 110N are spaced from each other in the width direction (the direction orthogonal to both the thickness direction and the height direction).

Insulating film 120 has a shape covering both the circumferential surface and the bottom surface of a set of the plurality of unit electrode assemblies 111, 112.

Cell case 200 accommodates electrode assembly 100. Cell case 200 also accommodates an electrolyte solution, which is not illustrated in the drawings. Cell case 200 is hermetically sealed. Cell case 200 has a case body 210 and a lid 220.

Case body 210 has an opening 211 that is open upward. Case body 210 is made of a metal such as aluminum. Case body 210 has a bottom wall 212 and a circumferential wall 214. Bottom wall 212 is formed in a rectangular flat shape. Circumferential wall 214 rises upward from bottom wall 212. Circumferential wall 214 is formed in a rectangular tubular shape. The length of circumferential wall 214 in the width direction is longer than the length of circumferential wall 214 in the thickness direction. The length of circumferential wall 214 in the height direction is longer than the length of circumferential wall 214 in the thickness direction.

Lid 220 closes opening 211 of case body 210. Lid 220 is connected to opening 211 by welding and/or the like. Lid 220 is formed in a flat shape. Lid 220 is made of a metal such as aluminum. Lid 220 has a lid body 222 and an invertible plate 224.

Lid body 222 is connected to case body 210 by welding and/or the like. Lid body 222 is provided with a pressure relief valve 222a, a liquid inlet hole 222b, a sealing member 222c, and a pair of pin-inserting holes 222d.

Pressure relief valve 222a is formed at the central portion of lid body 222. Pressure relief valve 222a is formed to break when the internal pressure of cell case 200 reaches a certain pressure or higher. When pressure relief valve 222a breaks, gas inside cell case 200 is released through pressure relief valve 222a to the outside of cell case 200, and thereby the internal pressure of cell case 200 decreases.

Liquid inlet hole 222b is a through hole through which the electrolyte solution is injected into cell case 200 during production of power storage cell 1.

Sealing member 222c is a member that seals liquid inlet hole 222b. Liquid inlet hole 222b is sealed by sealing member 222c after the electrolyte solution is injected into case body 210.

The pair of pin-inserting holes 222d are formed with some space between them in the width direction. Each pin-inserting hole 222d is a through hole through which a connecting pin 420 described below is inserted.

Invertible plate 224 is connected to lid body 222 by welding and/or the like. Invertible plate 224 has a shape that curves to protrude toward inside of lid body 222 from outside. When the internal pressure of cell case 200 reaches a certain pressure or higher, invertible plate 224 deforms into a shape that curves to protrude toward outside of cell case 200 from inside.

External terminal 300 is secured to the upper surface of cell case 200. To external terminal 300, a bus bar (which is not illustrated in the drawings) is connected by welding and/or the like. External terminal 300 has a positive electrode member 300P and a negative electrode member 300N.

Positive electrode member 300P is connected to the upper surface of cell case 200 by welding and/or the like. Positive electrode member 300P has a positive electrode terminal plate 310 and a terminal block 320.

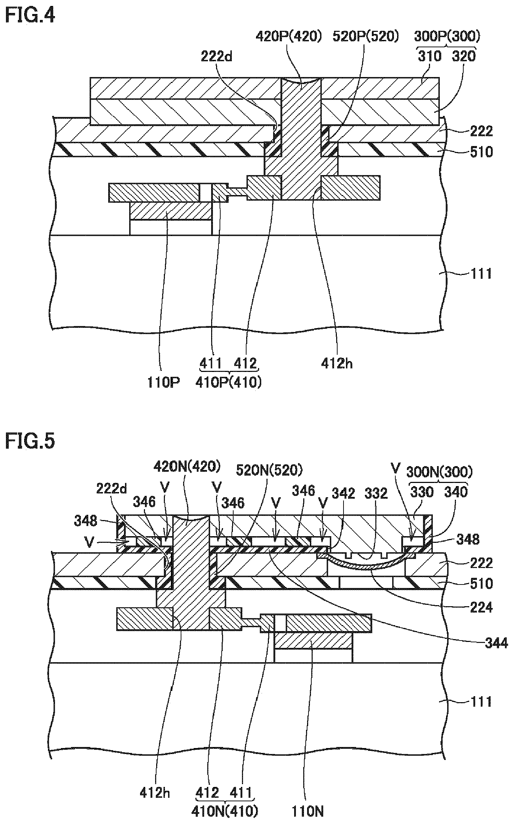

Fig. 4 is an enlarged cross-sectional view of a positive electrode member and its surroundings. As illustrated in Fig. 3 and Fig. 4, positive electrode terminal plate 310 is formed in the shape of a rectangular parallelepiped. Positive electrode terminal plate 310 is made of a metal such as aluminum.

Terminal block 320 is formed in the shape of a rectangular parallelepiped. Terminal block 320 is made of a metal (such as iron) that is different from the metal forming the positive electrode terminal plate 310. Terminal block 320 is connected to the upper surface of lid body 222 by welding, and to the upper surface of terminal block 320, positive electrode terminal plate 310 is connected by welding and/or the like. In other words, case body 210 and lid 220 are electrically connected to positive electrode terminal plate 310 with terminal block 320 being present therebetween, and are electrically charged with the same polarity as that of positive electrode terminal plate 310. Each of positive electrode terminal plate 310 and terminal block 320 is provided with a through hole through which a positive electrode connecting pin 420P described below is inserted.

Negative electrode member 300N is connected to the upper surface of cell case 200 by welding and/or the like. Negative electrode member 300N is spaced from positive electrode member 300P in the width direction. Negative electrode member 300N has a negative electrode terminal plate 330 and an insulating plate 340.

Fig. 5 is an enlarged cross-sectional view of a negative electrode member and its surroundings. As illustrated in Fig. 3 and Fig. 5, negative electrode terminal plate 330 is formed in the shape of a substantial rectangular parallelepiped. Negative electrode terminal plate 330 is located above cell case 200. More specifically, negative electrode terminal plate 330 is located above invertible plate 224. As illustrated in Fig. 5, negative electrode terminal plate 330 has a facing portion 332 facing invertible plate 224. When the internal pressure of cell case 200 is less than a certain pressure (namely, under normal circumstances), invertible plate 224 is spaced from facing portion 332.

Insulating plate 340 is secured to the upper surface of lid 220. At least part of insulating plate 340 is interposed between cell case 200 (lid 220) and negative electrode terminal plate 330. Insulating plate 340 insulates lid 220 from negative electrode terminal plate 330. Insulating plate 340 supports negative electrode terminal plate 330.

Insulating plate 340 supports negative electrode terminal plate 330 in such a manner that a gap V is formed between insulating plate 340 and negative electrode terminal plate 330. With this configuration, heat that is applied at the time of welding of negative electrode terminal plate 330 to the bus bar is released into gap V, and, thereby, propagation of the heat, which is applied at the time of welding of negative electrode terminal plate 330 to the bus bar, to insulating plate 340 may be reduced.

Each of negative electrode terminal plate 330 and insulating plate 340 is provided with a through hole through which a negative electrode connecting pin 420N described below is inserted.

As illustrated in Fig. 3 and Fig. 5, insulating plate 340 has an exposure hole 342 through which facing portion 332 is exposed.

Insulating plate 340 will be described in more detail. Insulating plate 340 has a flat-plate portion 344, a plurality of intervening portions 346, and a circumferential wall portion 348.

Flat-plate portion 344 is located on the upper surface of cell case 200. Flat-plate portion 344 is in contact with lid 220 (lid body 222). Exposure hole 342 is provided in flat-plate portion 344. Flat-plate portion 344 is formed of electrically-insulating resin.

The plurality of intervening portions 346 are interposed between flat-plate portion 344 and negative electrode terminal plate 330. The plurality of intervening portions 346 are spaced from each other and in contact with both the flat-plate portion 344 and the negative electrode terminal plate 330. This configuration makes it possible to stably support negative electrode terminal plate 330 by the plurality of intervening portions 346 and also to have a relatively large volume of gap V as compared to when a single intervening portion 346 is placed in the space between flat-plate portion 344 and the terminal plate. As a result, propagation of the heat, which is applied at the time of welding of negative electrode terminal plate 330 to the bus bar, to insulating plate 340 can be reduced.

For example, intervening portion 346 is an adhered member adhered to both the flat-plate portion 344 and the negative electrode terminal plate 330. When intervening portion 346 is an adhered member of this sort, it is possible to prevent negative electrode terminal plate 330 from coming off from flat-plate portion 344 of insulating plate 340 while allowing gap V to be formed between flat-plate portion 344 and negative electrode terminal plate 330.

The adhered member is a hardened product of an adhesive agent consisting of a resin composition, for example. With this configuration, it is possible to position negative electrode terminal plate 330 relative to the adhesive agent in a pre-hardened state which is placed on flat-plate portion 344.

The specific type of the adhesive agent is not particularly limited. For example, the adhesive agent may be a hot-melt adhesive agent, or a two-part hardening-type adhesive agent consisting of a resin composition that contains a thermosetting resin as its main component. Examples of the two-part hardening-type adhesive agent include two-part hardening-type urethane-based adhesive agents.

The adhered member may not be necessarily a hardened product of an adhesive agent. The adhered member may be an adhesive tape which has a pressure-sensitive adhesive agent on both sides.

It should be noted that intervening portion 346 is not limited to the adhered member. Intervening portion 346 may be a foamed body consisting of a resin composition and having the gap, for example. With this configuration, a gap may be easily formed between flat-plate portion 344 and negative electrode terminal plate 330. When intervening portion 346 is a foamed body having the gap, insulating plate 340 may have only a single intervening portion 346.

Circumferential wall portion 348 rises upward from flat-plate portion 344. Circumferential wall portion 348 is formed in a rectangular tubular shape. Circumferential wall portion 348 surrounds negative electrode terminal plate 330. Circumferential wall portion 348 is in contact with the entire circumference of negative electrode terminal plate 330.

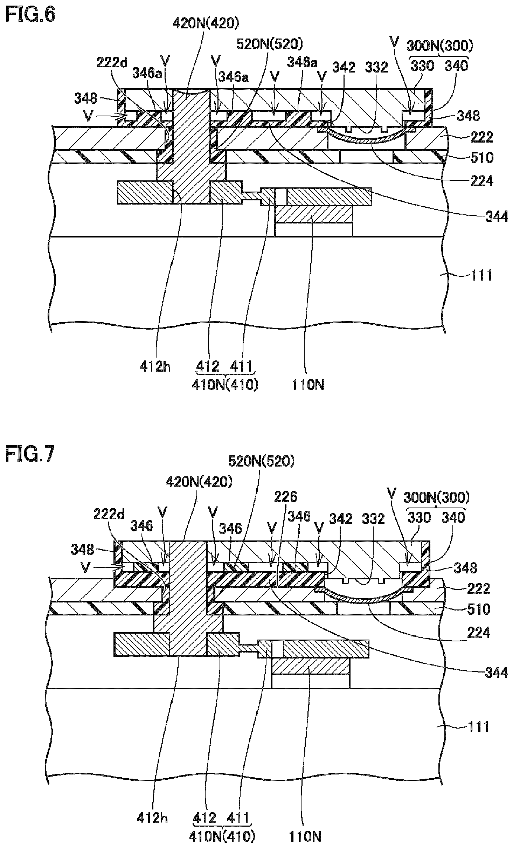

Insulating plate 340 is not limited to the above-described embodiment as long as it supports negative electrode terminal plate 330 in such a manner that gap V is formed between insulating plate 340 and negative electrode terminal plate 330. Fig. 6 is an enlarged cross-sectional view of a power storage cell according to First Modification of First Embodiment of the present disclosure. In Fig. 6, a cross section of the power storage cell according to First Modification is illustrated in the same manner as in Fig. 5.

As illustrated in Fig. 6, a plurality of intervening portions 346a may be integrally formed with flat-plate portion 344. This configuration allows for preventing an increase of the number of parts required for forming the insulating plate 340. The plurality of intervening portions 346a protrude from flat-plate portion 344 in a direction opposite to cell case 200 (lid 220).

From the viewpoint of preventing propagation of welding heat to cell case 200 and electrode assembly 100, it is preferable that flat-plate portion 344 of insulating plate 340 be as thick as possible. This is because the thermal conductivity of insulating plate 340 (flat-plate portion 344) is less than the thermal conductivity of cell case 200 which is made of metal.

Fig. 7 is an enlarged cross-sectional view of a power storage cell according to Second Modification of First Embodiment of the present disclosure. In Fig. 7, a cross section of the power storage cell according to Second Modification is illustrated in the same manner as in Fig. 5.

As illustrated in Fig. 7, lid 220 (lid body 222) may be provided with a depressed portion 226 in the upper surface. In depressed portion 226, insulating plate 340 (flat-plate portion 344) may be inserted. With this configuration, flat-plate portion 344 can be formed relatively thick. In addition, displacement of insulating plate 340 is even more reduced.

As illustrated in Fig. 3, connecting member 400 connects the plurality of tabs 110P, 110N and external terminal 300. Connecting member 400 has a current collector plate 410 and connecting pin 420.

Current collector plate 410 is connected to the plurality of tabs. Current collector plate 410 has a positive electrode current collector plate 410P and a negative electrode current collector plate 410N.

Positive electrode current collector plate 410P is connected to the plurality of positive electrode tabs 110P by welding and/or the like. Positive electrode current collector plate 410P has a first flat-plate portion 411 and a second flat-plate portion 412.

To first flat-plate portion 411, the plurality of positive electrode tabs 110P are connected by ultrasonic welding and/or the like. First flat-plate portion 411 is provided with a through hole. The plurality of positive electrode tabs 110P are connected to the lower surface of first flat-plate portion 411. Alternatively, the plurality of positive electrode tabs 110P may be connected to the upper surface of first flat-plate portion 411.

Second flat-plate portion 412 is placed on the outside of first flat-plate portion 411 in the width direction. Second flat-plate portion 412 is provided with a connecting hole 412h. As illustrated in Fig. 3, a thin portion may be formed between second flat-plate portion 412 and first flat-plate portion 411.

Negative electrode current collector plate 410N is connected to the plurality of negative electrode tabs 110N by welding and/or the like. The configuration of negative electrode current collector plate 410N is substantially the same as the configuration of positive electrode current collector plate 410P.

Connecting pin 420 connects current collector plate 410 and external terminal 300. Connecting pin 420 has positive electrode connecting pin 420P and negative electrode connecting pin 420N.

Positive electrode connecting pin 420P connects positive electrode current collector plate 410P and positive electrode terminal plate 310. Positive electrode connecting pin 420P is formed in a cylindrical shape. The lower end of positive electrode connecting pin 420P, in a state where it is inserted inside of connecting hole 412h, is connected to second flat-plate portion 412. The upper end of positive electrode connecting pin 420P is swaged to positive electrode terminal plate 310.

Negative electrode connecting pin 420N connects negative electrode current collector plate 410N and negative electrode terminal plate 330. Negative electrode connecting pin 420N is formed in a cylindrical shape. The lower end of negative electrode connecting pin 420N, in a state where it is inserted inside of connecting hole 412h, is connected to second flat-plate portion 412. The upper end of negative electrode connecting pin 420N is swaged to negative electrode terminal plate 330.

Insulating member 500 insulates connecting member 400 from cell case 200. Insulating member 500 has an insulating sheet 510 and an insulator 520.

Insulating sheet 510 is connected to the lower surface of lid body 222. Insulating sheet 510 is provided with through holes at a portion overlapping pressure relief valve 222a, a portion overlapping liquid inlet hole 222b, a portion overlapping each pin-inserting hole 222d, and a portion overlapping invertible plate 224 (in each case, the portion in question overlaps in the height direction).

When the internal pressure of cell case 200 rises to reach the above-mentioned certain pressure or higher due to an occurrence of an abnormality of electrode assembly 100 and the like, invertible plate 224 is inverted (namely, it deforms into a shape that curves to protrude upward) and thereby comes into contact with facing portion 332 of negative electrode terminal plate 330.

Insulator 520 has a shape surrounding connecting pin 420, and insulates connecting pin 420 from cell case 200. Insulator 520 has a positive-electrode-side insulator 520P and a negative-electrode-side insulator 520N.

Positive-electrode-side insulator 520P covers positive electrode connecting pin 420P. Positive-electrode-side insulator 520P is formed in a round tubular shape. Positive electrode connecting pin 420P has a covered portion 422 covered with positive-electrode-side insulator 520P.

Negative-electrode-side insulator 520N covers negative electrode connecting pin 420N. The structure of negative-electrode-side insulator 520N is the same as the structure of positive-electrode-side insulator 520P.

### (Second Embodiment)

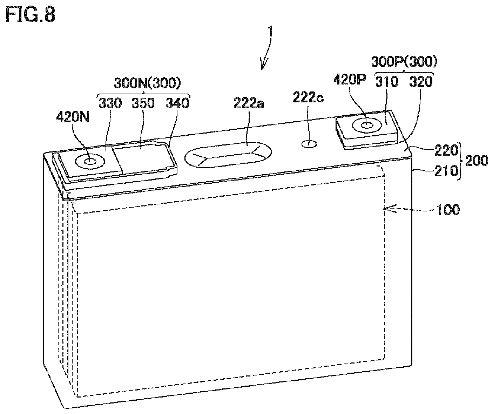

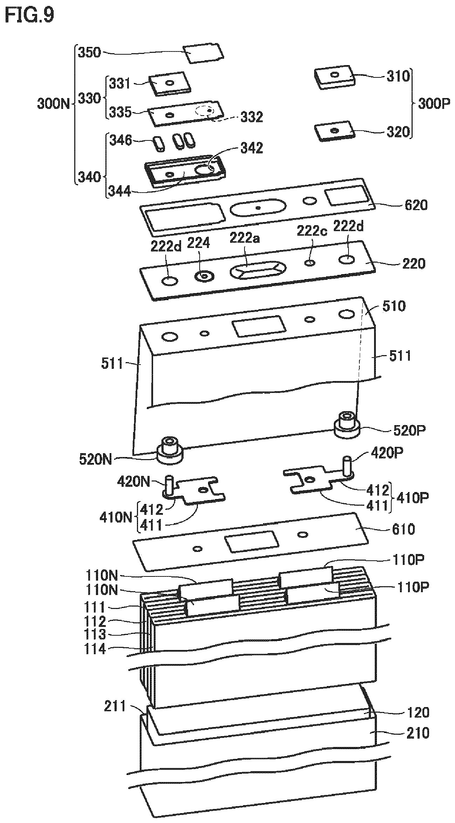

Next, with reference to Fig. 8 and Fig. 9, power storage cell 1 according to Second Embodiment of the present disclosure will be described. The below description of Second Embodiment only explains about the parts that are different from First Embodiment, and explanation of the same structure, action, and effect as in First Embodiment will not be repeated.

Fig. 8 is a perspective view schematically illustrating a power storage cell according to Second Embodiment of the present disclosure. Fig. 9 is an exploded perspective view of the power storage cell illustrated in Fig. 8. As illustrated in Fig. 8 and Fig. 9, power storage cell 1 according to the present embodiment further comprises an inner insulator 610 and an outer insulator 620.

Inner insulator 610 is placed inside cell case 200. More specifically, inner insulator 610 is interposed between electrode assembly 100 and current collector plate 410. Each of positive electrode tab 110P and negative electrode tab 110N is connected to current collector plate 410 at a position above inner insulator 610. Inner insulator 610 is provided with a through hole, at a portion that overlaps the through hole of first flat-plate portion 411 in the height direction. In the present embodiment, as illustrated in Fig. 9, electrode assembly 100 has four unit electrode assemblies 111 to 114.

Outer insulator 620 is placed on the outside of cell case 200. More specifically, outer insulator 620 is placed on the upper surface of lid 220. Outer insulator 620 is provided with through holes, at a portion overlapping positive electrode member 300P, a portion overlapping negative electrode member 300N, a portion overlapping pressure relief valve 222a, and a portion overlapping liquid inlet hole 222b (in each case, the portion in question overlaps in the height direction).

As illustrated in Fig. 9, insulating member 500 further has a pair of side sheets 511 connected to insulating sheet 510. Each side sheet 511 has a shape that extends downward from a thickness-direction edge of insulating sheet 510. Each side sheet 511 is interposed between a side of electrode assembly 100 and case body 210.

As illustrated in Fig. 8 and Fig. 9, negative electrode member 300N further has an insulating panel 350. Moreover, negative electrode terminal plate 330 has a terminal block 331 and an electrically-conductive plate 335. Electrically-conductive plate 335 is secured on insulating plate 340, and, to electrically-conductive plate 335, terminal block 331 is connected by welding and/or the like. Each of electrically-conductive plate 335 and terminal block 331 is provided with a through hole through which negative electrode connecting pin 420N is inserted. Electrically-conductive plate 335 has facing portion 332. Insulating panel 350 covers a portion of electrically-conductive plate 335 that is located above invertible plate 224.

A person skilled in the art will appreciate that the above-described example embodiments are specific examples of the following aspects.

### [Aspect 1]

A power storage cell comprising:
an electrode assembly;
a cell case accommodating the electrode assembly; and
an external terminal secured to an upper surface of the cell case, wherein
the external terminal has:
   a terminal plate located above the cell case; and
   an insulating plate interposed between the cell case and the terminal plate, and
the insulating plate supports the terminal plate in such a manner that a gap is formed between the insulating plate and the terminal plate.

With the power storage cell according to this aspect, heat that is applied at the time of welding of the external terminal to the bus bar is released into the gap, and, thereby, propagation of the heat, which is applied at the time of welding of the terminal plate to the bus bar, to the insulating plate may be reduced.

### [Aspect 2]

The power storage cell according to Aspect 1, wherein
the insulating plate has:
   a flat-plate portion located on the upper surface of the cell case; and
   a plurality of intervening portions interposed between the flat-plate portion and the terminal plate, and
the plurality of intervening portions are spaced from each other and in contact with both the flat-plate portion and the terminal plate.

This aspect makes it possible to stably support the terminal plate by the plurality of intervening portions and also to have a relatively large volume of the gap as compared to when a single intervening portion is placed in the space between the flat-plate portion and the terminal plate. As a result, propagation of the heat, which is applied at the time of welding of the terminal plate to the bus bar, to the insulating plate can be reduced.

### [Aspect 3]

The power storage cell according to Aspect 2, wherein each of the plurality of intervening portions is an adhered member adhered to both the flat-plate portion and the terminal plate.

With this aspect, because the intervening portion is an adhered member of this sort, it is possible to prevent the terminal plate from coming off from the flat-plate portion of the insulating plate while allowing a gap to be formed between the flat-plate portion and the terminal plate.

### [Aspect 4]

The power storage cell according to Aspect 3, wherein the adhered member is a hardened product of an adhesive agent consisting of a resin composition.

With this aspect, it is possible to position the terminal plate relative to the adhesive agent in a pre-hardened state which is placed on the flat-plate portion.

### [Aspect 5]

The power storage cell according to any one of Aspect 1 to Aspect 4, wherein
the insulating plate has:
   a flat-plate portion located on the upper surface of the cell case; and
   an intervening portion interposed between the flat-plate portion and the terminal plate, and
the intervening portion is a foamed body consisting of a resin composition and having the gap.

With this aspect, because the intervening portion is a foamed body, a gap may be easily formed between the flat-plate portion and the terminal plate.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A power storage cell comprising:
an electrode assembly (100);
a cell case (200) accommodating the electrode assembly (100); and
an external terminal (300) secured to an upper surface of the cell case (200), wherein
the external terminal (300) has:
a terminal plate (330) located above the cell case (200); and
an insulating plate (340) interposed between the cell case (200) and the terminal plate (330), and
the insulating plate (340) supports the terminal plate (330) in such a manner that a gap (V) is formed between the insulating plate (340) and the terminal plate (330).

2. The power storage cell according to claim 1, wherein
the insulating plate (340) has:
a flat-plate portion (344) located on the upper surface of the cell case (200); and
a plurality of intervening portions (346) interposed between the flat-plate portion (344) and the terminal plate (330), and
the plurality of intervening portions (346) are spaced from each other and in contact with both the flat-plate portion (344) and the terminal plate (330).

3. The power storage cell according to claim 2, wherein each of the plurality of intervening portions (346) is an adhered member adhered to both the flat-plate portion (344) and the terminal plate (330).

4. The power storage cell according to claim 3, wherein the adhered member is a hardened product of an adhesive agent consisting of a resin composition.

5. The power storage cell according to any one of claims 1 to 4, wherein
the insulating plate (340) has:
a flat-plate portion (344) located on the upper surface of the cell case (200); and
an intervening portion (346) interposed between the flat-plate portion (344) and the terminal plate (330), and
the intervening portion (346) is a foamed body consisting of a resin composition and having the gap (V).
